# EUROPÄISCHE PATENTANMELDUNG

(11) **EP 3 156 642 A1**
(43) Veröffentlichungstag der Anmeldung: **19.04.2017**
(21) Anmeldenummer: 15189785.7
(22) Anmeldetag: 14.10.2015
(51) Int. Cl.: F03B 3/04, F03B 3/18, F03D 1/04, F03D 3/04

(54) **STRÖMUNGSENERGIEANLAGE, INSBESONDERE WINDKRAFTANLAGE**

(71) Anmelder: FlowGen Development & Management GmbH, 6300 Zug (CH)
(72) Erfinder: Küster, Dirk Karl, 8121 Benglen (CH)
(74) Vertreter: Schaad, Balass, Menzl & Partner AG

(57) **Zusammenfassung**

Die Strömungsenergieanlage, insbesondere Windkraftanlage, weist ein wenigstens annähernd tropfenförmiges Gehäuse auf, von dessen Einlassöffnung zur Auslassöffnung (22) der von der Kanalwand (32) begrenzte Strömungskanal (30) verläuft. Um die Längsachse (12) ist der Propeller (34) drehbar gelagert, welcher durch das den Strömungskanal (30) durchströmende Fluid axial angeströmt ist. Die axiale Position des Propellers (34) ist mittels des Abstandverstellantriebs (76) veränderbar. Alternativ dazu oder zusätzlich ist die Kanalwand (32) veränderbar. Beispielsweise ist die Länge des Strömungskanals (30) mittels des Längenverstellantriebs (82) einstellbar. Durch diese Veränderungsmöglichkeiten ist es möglich, die Energieerzeugung mittels des Generators (48) an geänderte Verhältnisse des Fluidstroms, insbesondere des Winds anzupassen.

## Beschreibung

Die vorliegende Erfindung betrifft eine Strömungsenergieanlage, insbesondere eine Windkraftanlage, mit den Merkmalen des Oberbegriffs des Anspruchs 1.

Eine Strömungsenergieanlage dieser Art ist aus dem Dokument EP 2 395 235 A2 bekannt. Sie weist ein um dessen senkrechte Achse in Strömungsrichtung, insbesondere Windrichtung fluchtend verstellbares, im Querschnitt tropfenförmiges Gehäuse auf. Das Gehäuse hat vorderseitig eine Einlassöffnung zu einem inneren Strömungskanal, der zu zwei seitlichen am Gehäuse angeordneten Auslassöffnungen führt. Ein axial angeströmter Propeller ist im Strömungskanal angeordnet und der Strömungskanal weist in seinem sich an die Einlassöffnung anschliessenden Einlassbereich konvex verlaufende Begrenzungsflächen auf.

Es ist eine Aufgabe der vorliegenden Erfindung, eine gattungsgemässe Strömungsenergieanlage zu schaffen, welche bei unterschiedlichen Verhältnissen des antreibenden Fluids optimal Energie erzeugt.

Diese Aufgabe wird mit einer Strömungsenergieanlage, insbesondere einer Windkraftanlage gelöst, welche die Merkmale des Anspruchs 1 aufweist.

Die Strömungsenergieanlage weist ein Gehäuse mit einem wenigstens annähernd tropfenförmigen Längsschnitt auf, welches eine Längsachse definiert und um eine wenigstens annähernd rechtwinklig zur Längsachse verlaufende Achse in Strömungsrichtung eines antreibenden Fluids verbringbar ist. Durch den tropfenförmigen Querschnitt dreht sich das Gehäuse automatisch in Strömungsrichtung und die vom Fluid auf das Gehäuse einwirkende Kraft ist minimiert.

Bevorzugt weist das Gehäuse eine wenigstens annähernd ebene Deckenwand und eine parallel dazu verlaufende, wenigstens annähernde ebene Bodenwand auf, wobei die Form dieser Wände bevorzugt dem wenigstens annähernd tropfenförmigen Längsschnitt entspricht. Vom Rand der Deckenwand zum Rand der Bodenwand verläuft eine Gehäusewand, welche stromaufwärts einen Frontabschnitt ausbildet, welchem zwei einander gegenüberliegende Seitenabschnitte bis zum stromabwärts liegenden Ende des Gehäuses folgen.

Diese Form des Gehäuses mit ebener Decken- und Bodenwand hat den Vorteil, dass mehrere Gehäuse über einander modulartig angeordnet werden können.

Sind mehrere Gehäuse und somit mehrere Strömungsenergieanlagen übereinander angeordnet, weisen bevorzugt das oberste Gehäuse eine zur Längsachse rotationssymmetrische Deckenwand und das unterste Gehäuse eine zur betreffenden Längsachse rotationssymmetrische Bodenwand auf.

Ist nur ein einziges Gehäuse vorhanden, ist es auch denkbar, dieses zur Längsachse rotationssymmetrisch auszubilden.

Das Gehäuse weist eine stromaufwärtsliegende, vorderseitige Einlassöffnung - im Frontabschnitt - und eine bezüglich dieser stromabwärts angeordnete Auslassöffnung auf. Bevorzugt sind zwei einander gegenüberliegende Auslassöffnungen - in den Seitenabschnitten - vorhanden.

Aufgrund der wenigstens annähernden Tropfenform des Gehäuses wird durch das es umströmende Fluid ein Unterdruck aufgebaut, welcher auf den im Innern des Gehäuses von der Einlassöffnung zur Auslassöffnung beziehungsweise den Auslassöffnungen strömenden Fluidstrom eine Sogwirkung ausübt.

Im Innern des Gehäuses verläuft ein von der Einlassöffnung zur Auslassöffnung beziehungsweise den Auslassöffnungen verlaufender, von einer Kanalwand begrenzter Strömungskanal für das Fluid. Im Strömungskanal ist ein um die Längsachse drehbarer vom durch den Strömungskanal fliessenden Fluid axial angeströmter Propeller vorhanden. Dieser dient dem Antrieb eines elektrischen Generators. Bevorzugt ist der Durchmesser des Propellers nur geringfügig kleiner als die lichte Weite des Strömungskanals beim Propeller, sodass der möglichst gesamte durch den Strömungskanal fliessende Fluidstrom dem Antrieb des Propellers dient.

Das antreibende Fluid kann unterschiedliche Geschwindigkeiten und unterschiedliche Dichte aufweisen. Um bei diesen unterschiedlichen Fluidverhältnissen die Stromerzeugung optimieren zu können, ist der Propeller in seiner axialen Position und/oder die Kanalwand verstellbar beziehungsweise veränderbar ausgebildet. Für diese Verstellung beziehungsweise Veränderung ist jeweils ein Antrieb vorhanden.

Die erfindungsgemässe Ausführung der Strömungsenergieanlage kann auch der erhöhten Sicherheit dienen, indem beispielsweise bei sehr hohen Geschwindigkeiten des Fluids nur ein Teil des durch den Strömungskanal fliessenden Fluids zum Antrieb des Propellers genützt wird.

Beim Fluid handelt es sich bevorzugt um ein gasförmiges Medium, insbesondere Luft. Es ist jedoch auch ein flüssiges Medium, insbesondere Wasser denkbar.

Es ist auch möglich, dass das Gehäuse stromabwärtsseitig nicht keilförmig beziehungsweise spitz ausläuft, sondern zur Erzielung einer kürzeren Bauform "abgeschnitten" ausgebildet sein kann.

Weiter sei bemerkt, dass die Kanalwand mindestens von der Einlassöffnung bis stromabwärts des Propellers bevorzugt zur Längsachse, welche auch mit der Drehachse des Propellers zusammenfällt, rotationssymmetrisch ausgebildet ist.

Weiter sei erwähnt, dass die Auslassöffnung beziehungsweise die Auslassöffnungen sich über die gesamte Höhe des Gehäuses erstrecken können. In diesem Fall ist es denkbar, dass die Deckenwand und/oder die Bodenwand entsprechende Ausnehmungen aufweisen können, um die Auslassöffnung beziehungsweise Auslassöffnungen zu vergrössern.

Bevorzugt weist die Kanalwand einen in Strömungsrichtung sich verjüngenden, vorzugsweise zur Längsachse rotationssymmetrischen Einlassabschnitt auf. Dieser kann konisch oder, in Richtung zur Längsachse, konvex ausgebildet sein und schliesst bevorzugt unmittelbar an die Einlassöffnung an.

Bevorzugt schliesst kontinuierlich an den Einlassabschnitt ein zur Längsachse rotationssymmetrischen Mittenabschnitt an, in welchem auch der kleinste Durchmesser des Strömungskanals vorhanden ist. Bevorzugt ist im Mittenabschnitt der Querschnitt des Strömungskanals wenigstens annähernd konstant. Dies soll auch eine konvexe Ausführungsform umfassen, wobei jedoch die Krümmung wesentlich kleiner ist als im Einlassabschnitt, falls dieser konvex ausgebildet ist.

Bevorzugt schliesst an den Mittenabschnitt kontinuierlich ein Auslassabschnitt der Kanalwand an, welcher zur Auslassöffnung beziehungsweise den Auslassöffnungen führt. Im Auslassabschnitt ist die Kanalwand in Strömungsrichtung sich erweiternd ausgebildet, sodass bevorzugt der Querschnitt des Strömungskanals bis zur Auslassöffnung beziehungsweise den Auslassöffnungen diffusionsartig kontinuierlich zunimmt.

Der Propeller ist bevorzugt im Mittenabschnitt oder in einem stromaufwärts liegenden Endbereich des Auslassabschnitts angeordnet, bevorzugt dort, wo die höchsten Geschwindigkeiten des Fluids gegeben sind.

In einer bevorzugten Ausführungsform ist die in Richtung der Längsachse gemessene Länge des Mittenabschnitts veränderbar ausgebildet. Um diese Länge zu verändern, ist ein Längenverstellantrieb vorhanden.

Zu diesem Zweck kann die Kanalwand im Mittenabschnitt zweiteilig in axialer Richtung gefügt und teleskopierbar ausgebildet sein. Dabei wirkt bevorzugt der Längenverstellantrieb zwischen den beiden Teilen der Kanalwand. Bevorzugt ist der mit dem Auslassabschnitt verbundene Teil des Mittenabschnitts bezüglich des Gehäuses ortsfest und der mit dem Einlassabschnitt verbundene Teil des Mittenabschnitts in axialer Richtung verschiebbar ausgebildet.

Es ist auch denkbar, die Kanalwand im Mittenabschnitt in axialer Richtung elastisch verlängerbar auszubilden.

In einer bevorzugten Ausführungsform ist der Querschnitt des Mittenabschnitts veränderbar ausgebildet und ist ein Querschnittverstellantrieb zum Ändern des Querschnitts vorhanden. Diese Möglichkeit kann, zusammen mit der Veränderbarkeit der Länge des Mittenabschnitts, vorhanden sein.

Es ist beispielsweise denkbar, den Mittenabschnitt der Kanalwand aus in Umfangsrichtung sich schuppenartig überlappenden Mittenabschnitt-Wandsegmenten zu bilden, deren Überlappung mittels des Querschnittverstellantriebs veränderbar ist, um den Querschnitt des Strömungskanals zu verkleinern beziehungsweise zu vergrössern.

Es ist auch denkbar, die Kanalwand, insbesondere im Mittenabschnitt, als Membrane auszubilden und mittels des Querschnittverstellantriebs die Form derart zu ändern, dass der lichte Querschnitt vergrössert beziehungsweise verkleinert wird.

Bevorzugt bildet der Einlassabschnitt mit seinem stromaufwärts liegenden Ende eine Eintrittsöffnung und er ist derart ausgebildet, dass die Eintrittsöffnung mittels des Einlassverstellantriebs vergrössert und verkleinert werden kann.

Zu diesem Zweck ist es denkbar, den Einlassabschnitt bevorzugt konisch und durch in Umfangsrichtung sich schuppenartig überlappende Einlasssegmente auszubilden. Dadurch ist ermöglicht, mittels des Einlassverstellantriebs den Konuswinkel zu verändern, wobei bevorzugt am stromabwärts liegenden Ende des Einlassabschnitts, das heisst beim Mittenabschnitt, die lichte Weite unverändert bleibt.

Es ist denkbar, dass bei grösst möglicher Eintrittsöffnung diese mit der Einlassöffnung des Gehäuses zusammenfällt und bei Verkleinerung der Eintrittsöffnung ein Ringspalt zwischen dem Gehäuse und der Kanalwand entsteht. Dieser kann dazu dienen, insbesondere bei sehr hohen Geschwindigkeiten des Fluids, nur ein Teil des durch die Einlassöffnung strömenden Fluids in den Strömungskanal zu leiten. Der andere Teil kann beispielsweise durch zugeordnete Öffnungen im Gehäuse wieder der Umgebung zugeführt werden.

Bevorzugt ist der Strömungskanal im Auslassabschnitt auch durch eine in Strömungsrichtung sich erweiternde, bezüglich der Kanalwand innenliegende Innenwand begrenzt. Diese Innenwand kann zur Längsachse rotationssymmetrisch, kegelförmig sich erweiternd ausgebildet sein. Bevorzugt ist jedoch eine keilförmig sich erweiternde Form der Innenwand, welche sich gegebenenfalls von der Bodenwand zur Deckenwand erstreckt. In diesem Fall wird der Strömungskanal durch die Innenwand in zwei Ausströmabschnitte unterteilt, welche zu den seitlichen Auslassöffnungen führen.

Die Innenwand kann verformbar ausgebildet sein; beispielsweise biegbar. Dies ermöglicht die Anpassung der dortigen Strömungsquerschnitte des Strömungskanals an unterschiedliche Verhältnisse des Fluids. Zum Verändern der Form ist ein Formänderungsantrieb vorgesehen. Bevorzugt ist der mit dem Propeller wirkverbundene Generator im Gehäuse stromabwärts der Innenwand angeordnet. Er ist dadurch gegen Umwelteinflüsse und das durch die Strömungsenergieanlage strömende Fluid geschützt.

Der Generator und der Propeller sind bevorzugt in einem festen Abstand zueinander angeordnet und gemeinsam bezüglich des Gehäuses in Richtung der Längsachse verstellbar gelagert, wobei ein Lageverstellantrieb die Änderung der axialen Positionen des Generators und des Propellers ermöglicht. Die Generatorwelle kann den daran festmontierten Propeller tragen und der Generator kann auf einem Schlitten oder einem Wagen befestigt sein.

Es ist jedoch auch möglich, dass der Generator bezüglich des Gehäuses ortsfest angeordnet ist. In diesem Fall ist der Propeller relativ zum Generator in axialer Richtung verschiebbar ausgebildet, wobei die Position des Propellers mittels des Abstandsverstellantriebs eingestellt werden kann. Dies kann beispielsweise dadurch gelöst werden, dass der Propeller auf der Generatorwelle drehfest, jedoch in axialer Richtung verschiebbar gelagert ist.

Die Veränderbarkeit der Lage des Propellers kann mit der Ausführungsform mit veränderbarer Länge des Mittenabschnitts und/oder mit der Ausführungsform mit veränderbarem Einstellabschnitt und/oder mit der Ausführungsform mit veränderbarem Durchmesser kombiniert sein.

Bevorzugt weist das Gehäuse eine einzige Einlassöffnung und zwei einander gegenüberliegende seitliche Auslassöffnungen auf. In diesem Fall ist bevorzugt ein einziger Generator vorgesehen, welcher vom Propeller angetrieben ist. In diesem Zusammenhang sei erwähnt, dass der Propeller auch zwei oder mehr in Längsrichtung hinter einander angeordnete Propellersätze aufweisen kann.

Bevorzugt weist die Strömungsenergieanlage einen Masten auf, an welchem das Gehäuse um die Achse schwenkbar gelagert ist.

Es ist auch möglich, die Kanalwand von der Einlassöffnung bis zur Auslassöffnung membranartig auszubilden und den Querschnitt mittels eines Querschnittverstellantriebs einstellbar auszuführen. Neben gummielastischen Materialien zur Bildung der zur Längsachse rotationssymmetrischen Membran können auch Verbundwerkstoffe vorgesehen sein, welche ausreichend elastische Eigenschaften aufweisen.

Der Vollständigkeit halber sei auch erwähnt, dass das Gehäuse zusammen mit der Kanalwand einen flügelartigen Querschnitt bilden kann.

Die vorliegende Erfindung betrifft auch eine Strömungsenergieanlage mit einer stromaufwärts liegenden vorderseitigen Einlassöffnung und einer bezüglich dieser stromabwärts angeordneten Auslassöffnung, einem von der Einlassöffnung zur Auslassöffnung verlaufenden, von einer Kanalwand begrenzten Strömungskanal für ein antreibendes Fluid und einem im Strömungskanal angeordneten um die Längsachse drehbarem, vom Fluid axial angeströmten Propeller zum Antrieb eines elektrischen Generators, wobei der Propeller in seiner axialen Position und/oder Kanalwand - zur Optimierung der Stromerzeugung bei unterschiedlichen Fluidverhältnissen - verstellbar ausgebildet ist beziehungsweise sind und dass ein Antrieb zur genannten Verstellung vorhanden ist.

Dabei kann die Strömungsenergieanlage auch gemäss den abhängigen Ansprüchen mit den die Kanalwand, den Strömungskanal, dem Propeller und den Generator betreffenden Merkmalen ausgebildet sein.

Bei allen Ausführungsformen bildet die Kanalwand einlassseitig eine Düse und auslassseitig einen Diffusor.

Bevorzugt ist die Strömungsenergieanlage eine Windkraftanlage. Die Ausbildung als Hydrokraftanlage ist jedoch auch möglich.

Die Erfindung wird anhand in der Zeichnung dargestellten Ausführungsformen näher erläutert. Es zeigen rein schematisch:
- Fig. 1: in perspektivischer Darstellung von vorne seitwärts eine erfindungsgemässe Windkraftanlage mit einem im Längsschnitt tropfenförmigen Gehäuse, einem darin verlaufenden Strömungskanal und einem im Strömungskanal angeordneten Propeller zum Antrieb eines elektrischen Generators;
- Fig. 2: die Windkraftanlage gemäss Fig. 1 in einer perspektivischen Darstellung von oben seitwärts;
- Fig. 3: im Längsschnitt einen Teil der Windkraftanlage mit einer dem Strömungskanal begrenzenden, unveränderbaren Kanalwand und einem in seiner axialen Position veränderbaren Propeller;
- Fig. 4: in gleicher Darstellung wie Fig. 3. Die Windkraftanlage mit einer ihrer Länge veränderbaren Kanalwand und einem in axialer Richtung fest angeordneten Propeller;
- Fig. 5: in gleicher Darstellung wie Fig. 3 und 4. Die Windkraftanlage mit einer in ihrer Länge veränderbaren Kanalwand und einer in seiner axialen Position veränderbaren Propeller;
- Fig. 6: in gleicher Darstellung wie Fig. 1 bis 5. Die Windkraftanlage, bei welcher ein Einlassabschnitt der Kanalwand konusartig und mit seinem Konuswinkel veränderbar ausgebildet ist;
- Fig. 7: in gleicher Darstellung wie Fig. 3 bis 60 eine Ausführungsform der Windkraftanlage, bei welcher der Querschnitt eines Mittenabschnitts der Kanalwand veränderbar ausgebildet ist;
- Fig. 8: in gleicher Darstellung wie Fig. 3 bis 7 eine Ausführungsform der Windkraftanlage mit einer membranartig ausgeführten Kanalwand, deren Querschnitt veränderbar ausgebildet ist;
- Fig. 9: in gleicher Darstellung wie Fig. 3 bis 8 eine Ausführungsform der Windkraftanlage, bei welcher ein Teil des Gehäuses und die Kanalwand zusammen die Form eines Flügelprofils aufweisen; und
- Fig. 10: in gleicher Darstellung wie Fig. 3 bis 9 eine Ausführungsform der Windkraftanlage mit einer membranartig ausgeführten Kanalwand und einer in Strömungsrichtung sich erweiternden, bezüglich der Kanalwand radial innen liegenden Innenwand, welche verformbar ausgebildet und in Richtung gegen aussen biegbar ist.

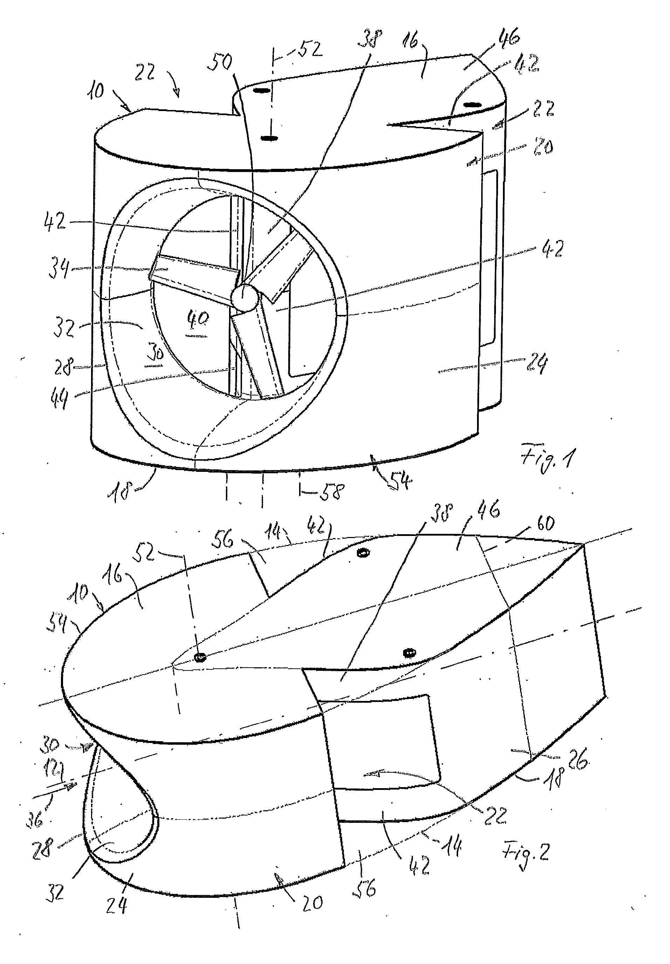

Die Fig. 1 und 2 zeigen eine Windkraftanlage mit einem Gehäuse 10, welches eine Längsachse 12 definiert und, im horizontalen Längsschnitt gesehen, tropfenförmig ausgebildet ist, wie dies durch die seitlichen gestrichelten Linien 14 in Fig. 2 verdeutlicht ist.

Das Gehäuse 10 weist eine tropfenförmige, ebene Deckenwand 16 und eine dazu parallele, tropfenförmige, ebene Bodenwand 18 auf; mittig zwischen diesen Wänden 16, 18 verläuft die Längsachse 12.

Vom Rand der Deckenwand 16 zum Rand der Bodenwand 18 verläuft eine Gehäusewand 20, welche zwei einander gegenüberliegende, seitliche Auslassöffnungen 22 bildend, unterbrochen ist. Der Stromaufwärts liegende vordere Teil der Gehäusewand 20, welcher sich von der einen Auslassöffnung 22 zur andern erstreckt, sei Frontabschnitt 24 genannt. Diejenigen Teile der Gehäusewand 20, welche sich von den Auslassöffnungen 22 zum stromabwärts liegenden Ende des Gehäuses 10 erstrecken, seien Seitenabschnitte 26 genannt.

Das Gehäuse 10 weist im Frontabschnitt 24 eine stromaufwärts liegende, vorderseitige Einlassöffnung 28 auf, welche, in Richtung der Längsachse 12 gesehen, kreisförmig ausgebildet ist. Von der Einlassöffnung 28 zu den beiden Auslassöffnungen 22 verläuft im Gehäuse 10 ein Strömungskanal 30, welcher umfangsseitig von einer Kanalwand 32 begrenzt ist.

Im Strömungskanal ist ein, hier dreiblättriger Propeller 34 um die Längsachse 12 drehbar angeordnet.

Von der Einlassöffnung 28 bis stromabwärts des Propellers 34 ist die Kanalwand 32 zur Längsachse 12 rotationssymmetrisch ausgebildet und zwischen den radial aussen liegenden Enden des Propellers 34 und der Kanalwand 32 ist ein Spalt vorhanden, welcher möglichst klein gewählt wird zur optimalen Ausnützung eines durch den Strömungskanal 30 strömenden Fluids, im vorliegenden Fall Luft; die Strömungsrichtung der Luft ist in Fig. 2 mit einem Pfeil 36 angedeutet.

Stromabwärts des Propellers 34 wird der Strömungskanal 30 durch eine Innenwand 38 in zwei Auslasskanäle 40 unterteilt, wobei im gezeigten Ausführungsbeispiel die Innenwand 38 zwei Wandsegmente 42 aufweist, welche sich rechtwinklig zur Bodenwand 18 und von dieser zur Deckenwand 16 erstrecken. Die beiden Wandsegmente verlaufen, in Strömungsrichtung 36 gesehen, von einer abgerundeten Vorderkante 44 symmetrisch zur Längsachse 12 voneinander weg bis zu den Seitenabschnitten 26, wobei sie mittels einer Biegung stetig in die Seitenabschnitte 26 übergehen.

Im von der Deckenwand 16, der Bodenwand 18, der Innenwand 38 und den Seitenabschnitten 26 umschlossenen hinteren Gehäuseteil 46 befindet sich ein elektrischer Generator 48 - siehe die folgenden Figuren - auf dessen die Vorderkante 44 durchdringenden Antriebswelle 50 der Propeller 34 sitzt.

Mit einer strichpunktierten Linie ist eine Achse 52 angedeutet, welche rechtwinklig zur Längsachse 12 und im vorliegenden Fall in vertikaler Richtung verläuft, um welche das Gehäuse 10 vorzugsweise frei drehbar gelagert ist. Infolge der im stromaufwärts liegenden vorderen Gehäuseteil 54 angeordneten Achse 52 und seiner Tropfenform richtet sich das Gehäuse 10 automatisch in Strömungsrichtung 36 aus.

Im gezeigten Ausführungsbeispiel weisen die Deckenwand 16 und Bodenwand 18 seitliche Ausnehmungen 56 auf, welche sich von stromabwärts liegenden Enden des Frontabschnitts 24 und somit dem stromaufwärts liegenden Ende der Auslassöffnungen 22 rechtwinklig zur Längsachse 12 bis zur Innenwand 38 und dann entlang der Innenwand 38 bis zu den Seitenabschnitten 26 erstrecken. Dadurch befindet sich ein Teil der Auslassöffnungen auch decken- und bodenseitig. Es sei jedoch vermerkt, dass es auch möglich ist, auf diese Ausnehmungen 56 zu verzichten.

In der Fig. 1 ist mit dem Bezugszeichen 58 ein Mast angedeutet, an welchem das Gehäuse 10 um die Achse 52 drehbar gelagert angeordnet ist.

An dieser Stelle sei erwähnt, dass mehrere in den Fig. 1 und 2 gezeigte Windkraftanlagen modulartig übereinander, paarweise aneinander anliegend angeordnet sein können. In diesem Fall ist es möglich, die Deckenwand 16 der obersten Windkraftanlage und die Bodenwand 18 der untersten Windkraftanlage zu den betreffenden Längsachsen 12 rotationszylindrisch auszubilden.

Wie dies mit gestrichelten Gehäuserandlinien 60 angedeutet ist, besteht auch die Möglichkeit, um Baulänge zu sparen, das Gehäuse 10 nicht bis zur stromabwärts liegenden Kante, an welcher die Seitenabschnitte 26 aneinander stossen, auszubilden, sondern bei den Gehäuserandlinien 60 zu beenden.

Selbstverständlich ist es möglich, die dadurch schon abwärts liegende Rückwand eben oder gebogen auszuführen.

Die folgenden Figuren zeigen Horizontalschnitte auf Höhe der Längsachse 12 durch den Strömungskanal 30 und die Innenwand 38, wobei auch der Generator 48 und der auf dessen die Innenwand 38 durchdringenden Antriebsfälle 50 sitzende Propeller 34 dargestellt ist.

Die nur schematisch dargestellte Kanalwand 32 weist stromaufwärts einen Einlassabschnitt 62 auf, welcher hier in Strömungsrichtung konisch verjüngend ausgebildet ist. Diesem Einlassabschnitt 62 folgt in Strömungsrichtung unmittelbar ein Mittenabschnitt 64 mit dem kleinsten Querschnitt des Strömungskanals 30. Stromabwärts des Mittenabschnitts 64 folgt diesem unmittelbar ein sich im vorliegenden Fall konisch erweiternder Auslassabschnitt 66.

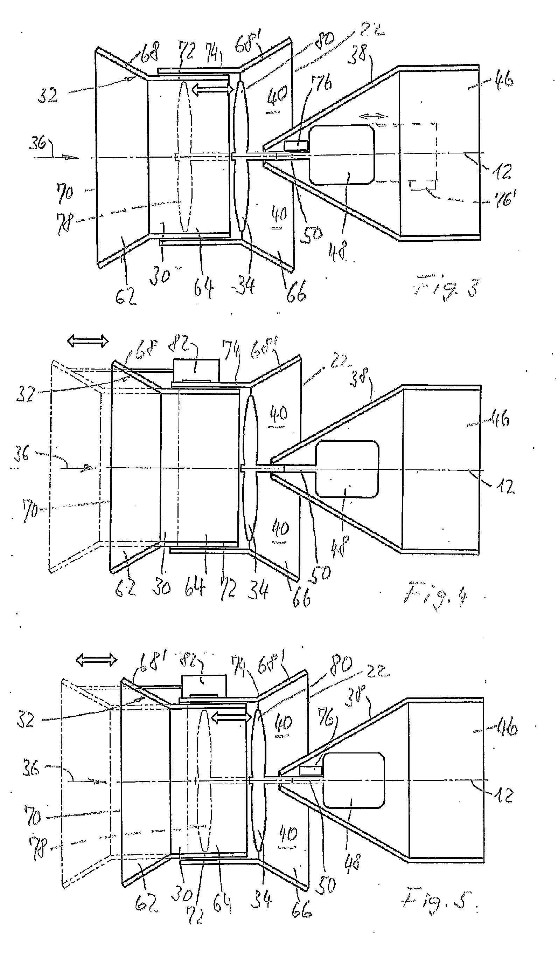

Die hier rotationssymmetrisch zur Längsachse 12 ausgebildete Kanalwand 32 ist in den Figuren 3 bis 5 zweiteilig dargestellt. Ein erster Kanalwandteil 68 weist den mit seinem stromaufwärts liegenden Ende eine Eintrittsöffnung 70, des Strömungskanals 30 definierenden Einlassabschnitt 62 und einen daran anschliessenden kreiszylinderförmigen ersten Mantelteil 72 auf. Dieser ist von einem kreiszylinderförmigen zweiten Mantelteil 74 umgriffen, an welchen stromabwärts unmittelbar der Auslassabschnitt 66 anschliesst. Der erste Mantelteil 72 und der zweite Mantelteil 74 sind in axialer Richtung gefügt und miteinander fest verbunden.

Im stromaufwärts von der Innenwand 38 begrenzten hinteren Gehäuseteil 46 befindet sich der Generator 48 mit seiner zur Längsachse 12 zentrischen Antriebswelle 50.

Ebenfalls im hinteren Gehäuseteil 46 befindet sich ein Abstandverstellantrieb 76, mittels welchem die axiale Position des Propellers 34 verstellbar ist.

Zu diesem Zweck ist es möglich, den Propeller 34 auf der Antriebswelle 50 drehbar, jedoch in axialer Richtung verschiebbar anzuordnen und mittels des Abstandverstellantriebs 76 den Abstand zwischen dem fest angeordneten Generator 48 und dem Propeller 34 zu verändern, indem der Propeller 34 auf der Antriebswelle 50 verschoben wird. Eine weitere Möglichkeit besteht darin, die Antriebswelle 50 teleskopierbar auszubilden und den Propeller 34 auf dem ausfahrbaren Teil der Antriebswelle 50 sowohl in Umfangsrichtung als auch in axialer Richtung fest anzuordnen.

Eine weitere Möglichkeit besteht darin, den Generator 48 im Gehäuse 10 auf einem Wagen oder Schlitten zu befestigen und mittels eines Lageverstellantriebs 76' den Generator 48, zusammen mit dem auf dessen Antriebswelle 50 fest angeordneten Propeller 34, in axialer Richtung in die gewünschte Position zu verschieben.

Wie in Fig. 3 mit dem Doppelpfeil angedeutet, ist der Propeller 34 zwischen einer mit strichpunktierten Linien angedeuteten, stromaufwärts liegenden ersten Endposition 78 in eine, mit ausgezogenen Linien gezeigten, stromabwärts liegende zweite Endposition 80 hin und her verschiebbar, wobei auch Zwischenstellungen möglich sind.

Die erste Position 78 befindet sich zwischen dem in Strömungsrichtung gesehen stromaufwärts liegenden Ende und der Mitte des Mittenabschnitts 64. Die zweite Position 80 befindet sich beim stromabwärts liegenden Ende des Mittenabschnitts. Sie kann sich auch im stromaufwärtsseitigen Endabschnitt des Auslaufabschnitts 66 befinden.

Bei der in Fig. 4 dargestellten Ausführungsform ist der zweite Kanalwandteil 68' im Gehäuse 10 ortsfest angeordnet, wogegen der erste Kanalwandteil 68 bezüglich dem zweiten Kanalwandteil 68' mittels eines Längenverstellantriebs 82 in axialer Richtung verschiebbar ist. Dadurch ist die Länge des Strömungskanals 30 veränderbar.

Bei kürzester Länge des Strömungskanals 30 haben der erste Mantelteil 72 und der zweite Mantelteil 74 maximale Überlappung. Im gezeigten Ausführungsbeispiel liegt das stromabwärts liegende Ende des ersten Mantelteils 72 nahe beim diesseitigen Ende des Mittenabschnitts 64.

Bei grösster Länge des Strömungskanals 30 überlappen sich der erste Mantelteil 72 und der zweite Mantelteil 74 nur noch geringfügig, wie dies mit strichpunktierten Linien dargestellt ist.

Während bei der in der Fig. 4 gezeigten Ausführungsform der Propeller 34 in seiner axialen Position beim Übergang vom Mittenabschnitt 64 zum Auslassabschnitt 66 unveränderbar ist, zeigt die Ausführungsform gemäss Fig. 5 eine Kombination der Ausführungsformen gemäss Fig. 3 und 4, bei welcher sowohl die axiale Position des Propellers 34 als auch die Länge des Strömungskanals 30 veränderbar ist.

Bei tieferen Windgeschwindigkeiten dürfte die Länge des Strömungskanals 30 eher gross und die Position des Propellers 34 bei der ersten Position 78 gewählt werden. Bei hohen Windgeschwindigkeiten dürfte die Länge klein und gegebenenfalls die Position des Propellers bei 80 gewählt werden.

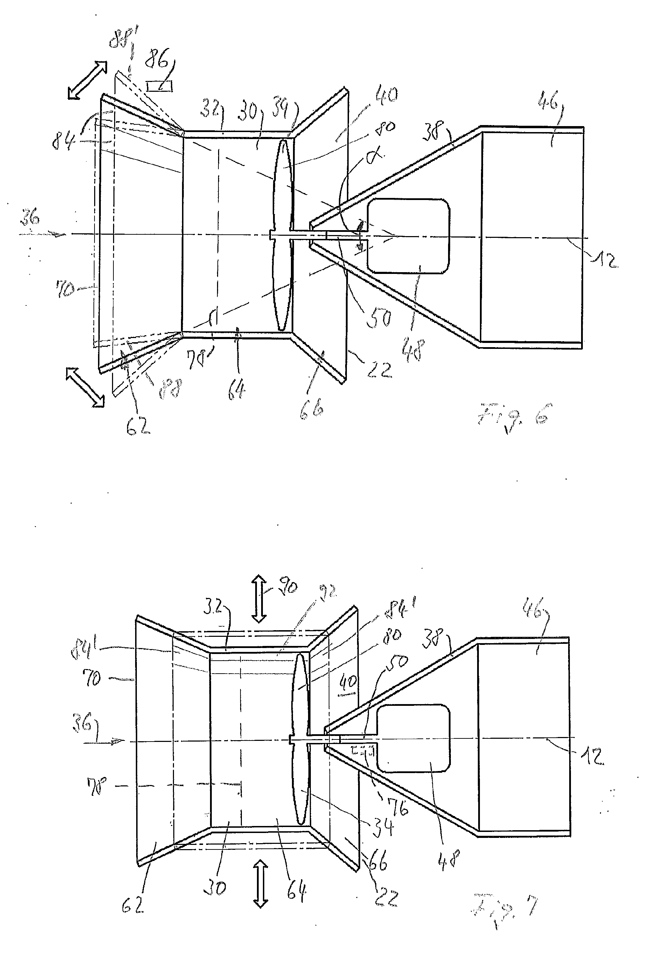

Bei der Ausführungsform gemäss Fig. 6 ist der Strömungskanal 30 durch den in Strömungsrichtung 36 sich konisch verjüngenden Einlassabschnitt 62, den daran anschliessenden Mittenabschnitt 64 mit konstantem kreisförmigen Querschnitt und den daran anschliessenden sich konisch erweiternden Auslassabschnitt 66 begrenzt. Während der Mittenabschnitt 64 und der Auslassabschnitt 66 unveränderbar ausgebildet sind, ist der Konuswinkel α Einlassabschnitts 62 veränderbar.

Zu diesem Zweck kann die Kanalwand 32 im Einlassabschnitt 64 aus in Umfangsrichtung sich schuppenartig überlappenden Einlasssegmenten 84 gebildet sein, welche an ihrem stromabwärts liegenden Ende am Mittenabschnitt um tangential verlaufende Achsen schwenkbar gelagert sind.

Mit 86 ist ein Einlassverstellantrieb angedeutet, mittels welchem der Einlassabschnitt 62 zwischen einer strichpunktiert angedeuteten Minimalposition 88 über die mit ausgezogenen Linien angedeutete Zwischenpositionen in eine ebenfalls mit strichpunktierten Linien angedeutete Maximalposition 88' hin und her veränderbar ist. Entsprechend wird die Eintrittsöffnung 70 des Strömungskanals 30 verändert.

Bei der in Fig. 6 gezeigten Ausführungsform sind der Generator 48 und der Propeller 34 in axialer Richtung gesehen ortsfest angeordnet, wobei sich der Propeller 34 beim stromabwärts liegenden Ende des Mittenabschnitts 64 befindet.

Es ist jedoch auch möglich, bei dieser Ausführungsform die Position des Propellers 34 veränderbar auszubilden, wie dies anhand der Fig. 3 gezeigt und erläutert ist.

Bei der in Fig. 7 gezeigten Ausführungsform schliesst an den konisch ausgebildeten Einlassabschnitt 62 unmittelbar der kreiszylinderförmige Mittenabschnitt 64 an, dessen Durchmesser mittels eines in Doppelpfeilen angedeuteten Querschnittverstellantrieb 90 veränderbar ausgebildet ist. An den Mittenabschnitt 64 schliesst unmittelbar der in Strömungsrichtung 36 in seinem Durchmesser sich erweiternde Auslassabschnitt 66 an.

Der Mittenabschnitt 64 der Kanalwand 32 kann beispielsweise aus in Umfangsrichtung sich schuppenartig überlappenden Wandsegmenten 92 ausgebildet sein, deren Überlappung bei Vergrösserung des Durchmessers des Strömungskanals 30 abnimmt und umgekehrt bei Verkleinerung des Querschnitts des Strömungskanals 30 sich vergrössert.

Es ist möglich, die in Längsrichtung gesehenen jeweils aussenliegenden Endbereiche des Einlassabschnitts 62 und Auslassabschnitt 66 formfest auszubilden und die jeweils innenliegenden Bereiche mit Einlass- beziehungsweise Auslasssegmenten 84' zu versehen, welche an den formstabilen Abschnitten um tangentiale Achsen schwenkbar gelagert sind und sich in Umfangsrichtung schuppenartig überlappen. Mit den dem Mittenabschnitt 64 zugewandten Enden können diese Einlass- und Auslasssegemente 84' an den Wandsegmenten 92 des Mittenabschnitts geführt sein, sodass einem radialen Vergrössern des Mittenabschnitts 64 der durch die Einlass- und Auslasssegmente 84' definierte Konuswinkel sich verkleinert und umgekehrt.

Auch bei der Ausführungsform gemäss Fig. 7 ist es möglich, in gleicher Art und Weise wie im Zusammenhang mit Fig. 3 erläutert, die axiale Position des Propellers 34 zwischen der ersten Position 78 und der zweiten Position 80 zu verstellen.

Weiter ist es bei den in den Figuren 3 bis 7 gezeigten Ausführungsformen auch möglich, die dort konisch dargestellten Einlass- und Auslassabschnitte 62, 66, in Richtung zur Längsachse 12, konvex gekrümmt auszubilden wobei weiter bevorzugt die Übergänge zum und vom Mittenabschnitt 64 stetig sind.

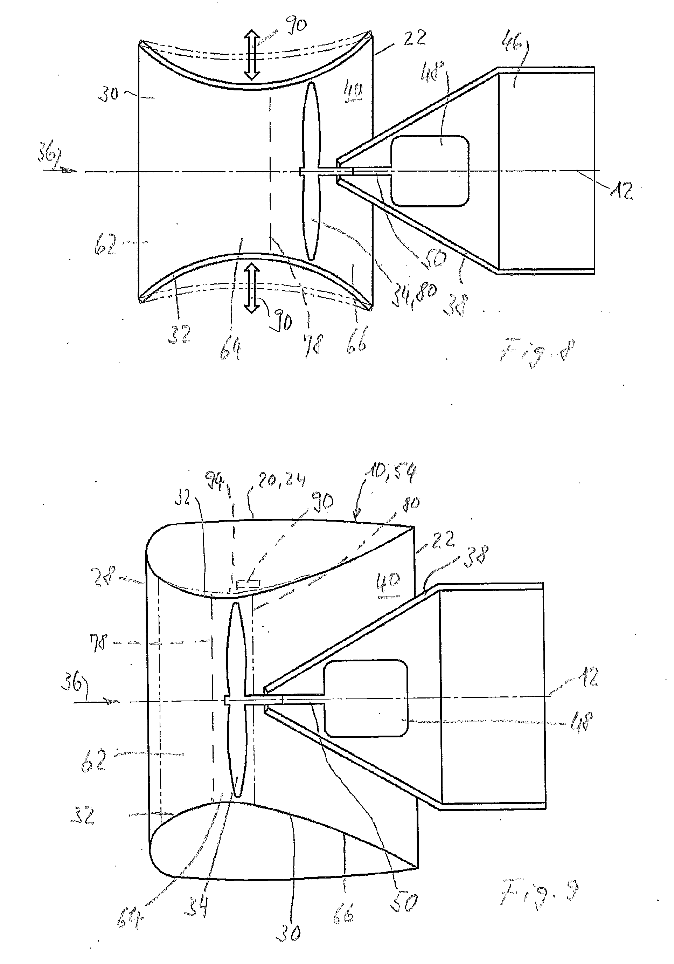

Bei der in Fig. 8 gezeigten Ausführungsform ist die Kanalwand 32 einstückig und über ihre gesamte, in Richtung der Längsachse 12 gesehene Länge in radialer Richtung gegen innen konvex gebogen und zur Längsachse 12 rotationssymmetrisch ausgebildet. Auch hier weist die Kanalwand 32 und somit der von dieser begrenzte Strömungskanal 30 einen Einlassabschnitt 62, einen daran unmittelbar anschliessenden Mittenabschnitt 64 und einen daran stromabwärts anschliessenden Auslassabschnitt 66 auf, welcher zur Auslassöffnung 22 führt.

Im Einlassabschnitt 62 verengt sich, in Strömungsrichtung 36, der Querschnitt des Strömungskanals 30 kontinuierlich, während im Mittenabschnitt 62 die Änderung nur noch geringfügig ist und der kleinste Strömungsquerschnitt sich dort befindet. Im Auslassabschnitt 66 nimmt der Strömungsquerschnitt wieder kontinuierlich stärker zu als im Mittenabschnitt 64. Der Übergang von einem Abschnitt zum andern ist stetig.

Die Kanalwand 32 kann in der Art einer Membrane aus einem elastischen Material ausgebildet sein, wobei wie mit den beiden Doppelpfeilen 90 angedeutet, welche auch einen Querschnittverstellantrieb symbolisieren, der Querschnitt des Strömungskanals 30 und somit auch die Krümmung der Kanalwand 32 veränderbar ist zwischen einer mit ausgezogenen Linien dargestellten Form mit maximalen Krümmungen und einer mit strichpunktierten Linien dargestellten Form mit minimalen Krümmungen und somit entsprechend minimalen beziehungsweise maximalen kleinsten Durchmesser des Strömungskanals 30 im Mittenabschnitt 64.

Es ist auch eine Ausbildung der Kanalwand 32 aus Verbundmaterialien möglich.

Der sich im hinteren Gehäuseteil 64 befindende Generator 48 und der auf dessen Antriebswelle 50 fest angeordnete Propeller 34 sind nicht verstellbar gezeigt, wobei sich der Propeller 34 beim stromabwärtsseitigen Übergang des Mittenabschnitts 64 in dem Auslassabschnitt 66 befindet.

Bei engstem Strömungskanal 30 wird der Propeller 34 axial praktisch von der gesamten Luftmasse angeströmt, während bei diesbezüglich weiterem Strömungskanal 30 ein radial aussen liegender Mantelteil der Luftströmung den Propeller 34 umströmt.

Dementsprechend wird bei kleineren Luftgeschwindigkeiten der Strömungskanal 30 auf minimalen Durchmesser eingestellt und bei Sturm auf maximalen Strömungsquerschnitt.

Weiter ist es auch bei dieser Ausführungsform denkbar, die Position des Propellers 34 veränderbar auszugestalten, wie dies im Zusammenhang mit der Fig. 3 erläutert und gezeigt ist.

Bei der Ausführungsform gemäss Fig. 9 bilden die Gehäusewand 20 im Frontabschnitt 24 und die Kanalwand 32 im Längsquerschnitt ein Flügelprofil. Bevorzugt ist dieses rotationssymmetrisch, ringförmig zur Längsachse 12 ausgebildet.

An den von der Einlassöffnung 28 her konvex gebogenen Einlassabschnitt 62 schliesst stetig der Mittenabschnitt 64 an. Dieser ist ebenfalls konvex gebogen, jedoch mit geringerer Biegung als der Einlassabschnitt 62. In Strömungsrichtung 36 gesehen, schliesst an den Mittenabschnitt stetig und ebenfalls mit konvexer Biegung der Auslassabschnitt 66 an.

Wie bei allen Ausführungsformen befindet sich der kleinste Durchmesser des Strömungskanals 30 im Mittenabschnitt 64, wo die grössten Geschwindigkeiten des Fluid gegeben ist.

Wie in der Fig. 9 gezeigt, befindet sich auch der Propeller 34 im Mittenabschnitt 64.

Wie mit einer strichpunktierten Linie 94 angedeutet, ist es möglich, mittels eines Querschnittverstellantriebs 90 das Profil der Kanalwand 32 zu verändern. Zu diesem Zweck ist es möglich, die Kanalwand 32 membranartig auszubilden.

Weiter ist es auch bei dieser Ausführungsform möglich, die axiale Position des Propellers 34 veränderbar auszubilden, wie dies im Zusammenhang mit der Fig. 3 erläutert ist.

Bei hohen Windgeschwindigkeiten dürfte das Profil der Kanalwand 32 gestreckter als bei tieferen Windgeschwindigkeiten gewählt werden.

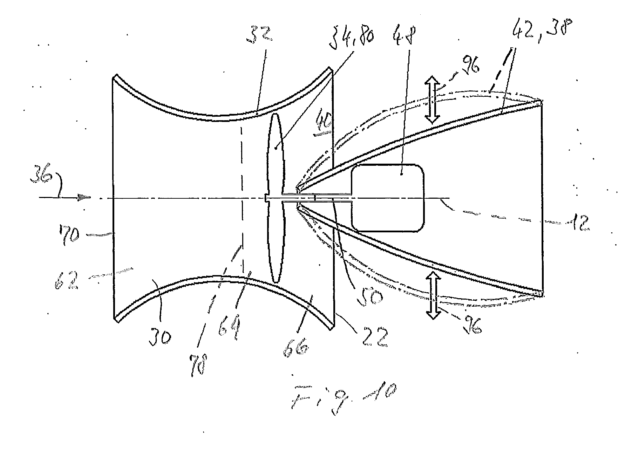

Bei der in Fig. 10 gezeigten Ausführungsform ist die Kanalwand 32 und somit der Strömungskanal 30 gleich ausgebildet wie in Fig. 8 gezeigt und erläutert. Eine Ausbildung wie in den übrigen Figuren gezeigt ist jedoch auch möglich.

Die Innenwand 38 ist bei der Ausführungsform gemäss Fig. 10 jedoch veränderbar ausgeführt und mittels eines Innenwandantriebs 96, welcher durch Doppelpfeile angedeutet ist, sind die Wandsegmente 42 der Innenwand 38 aus einer wenigstens annähernd ebenen Form in eine nach Aussen konvex gebogene Form verbringbar, wodurch der Querschnitt des Auslasskanals 40 entsprechend geänderten Windverhältnissen anpassbar ist.

Auch diese Veränderbarkeit der Innenwand 38 ist bei allen andern Ausführungsformen anwendbar.

Auch ist es bei der Ausführungsform gemäss Fig. 10 möglich, die axiale Position des Propellers 34 veränderbar auszubilden, wie dies im Zusammenhang mit der Fig. 3 erläutert ist.

Es sei erwähnt, dass für gleiche, beziehungsweise gleich wirkende Teile sämtlicher Ausführungsformen die gleichen Bezugszeichen verwendet worden sind, sodass über die Bezugszeichen in den Figuren die betreffenden Teile angegeben sind, auch wenn sie im Text der Figurenbeschreibung nicht spezifisch erwähnt sind.

## Patentansprüche

1. Strömungsenergieanlage, insbesondere Windkraftanlage, mit einem eine Längsachse (12) definierenden, einen wenigstens annähernd tropfenförmigen Längsschnitt aufweisenden und um eine wenigstens annähernd rechtwinklig zur Längsachse (12) verlaufende Achse (52) in Strömungsrichtung (36) eines antreibenden Fluids verbringbaren Gehäuse (10), einer stromaufwärts liegenden, vorderseitigen Einlassöffnung (28) des Gehäuses (10) und einer bezüglich dieser stromabwärts angeordneten Auslassöffnung (22) des Gehäuses (10), einem von der Einlassöffnung (28) zur Auslassöffnung (22) im Innern des Gehäuses (10) verlaufenden, von einer Kanalwand (32) begrenzten Strömungskanal (30) für das Fluid, und einem im Strömungskanal (30) angeordneten, um die Längsachse (12) drehbaren, vom Fluid axial angeströmten Propeller (34) zum Antrieb eines elektrischen Generators (48), **dadurch gekennzeichnet, dass** der Propeller (34) in seiner axialen Position (72, 74) und/oder die Kanalwand (32) - zur Optimierung der Stromerzeugung bei unterschiedlichen Fluidverhältnissen - verstellbar ausgebildet ist beziehungsweise sind, und dass ein Antrieb (76, 76', 82, 86, 90, 96) zur genannten Verstellung vorhanden ist.

2. Strömungsenergieanlage nach Anspruch 1, **dadurch gekennzeichnet, dass** die Kanalwand (32) einen in Strömungsrichtung (36) sich verjüngenden, vorzugsweise zur Längsachse (12) rotationssymmetrischen Einlassabschnitt (62), einen an diesen kontinuierlich anschliessenden, zur Längsachse (12) rotationssymmetrischen Mittenabschnitt (64) mit dem kleinsten Durchmesser des Strömungskanals (30) und einen daran kontinuierlich anschliessenden, zur Auslassöffnung (22) führenden, vorzugsweise in Strömungsrichtung (36) sich erweiternden Auslassabschnitt (66) aufweist und der Propeller (34) im Mittenabschnitt (64) oder in einem stromaufwärts liegenden Endbereich des Auslassabschnitts (66) angeordnet ist.

3. Strömungsenergieanlage nach Anspruch 2, **dadurch gekennzeichnet, dass** die Länge des Mittenabschnitts (64) veränderbar ausgebildet und ein Längenverstellantrieb (82) zum Ändern der Länge vorhanden ist.

4. Strömungsenergieanlage nach Anspruch 3, **dadurch gekennzeichnet, dass** der Mittenabschnitt (64) einen kreiszylinderförmigen Querschnitt aufweist und teleskopierbar ausgebildet ist.

5. Strömungsenergieanlage nach einem der Ansprüche 2 bis 4, **dadurch gekennzeichnet, dass** der Querschnitt des Mittenabschnitts (64) veränderbar ausgebildet und ein Querschnittverstellantrieb (90) zum Ändern des Querschnitts vorhanden ist.

6. Strömungsenergieanlage nach Anspruch 5, **dadurch gekennzeichnet, dass** der Mittenabschnitt (64) membranartig ausgebildet ist.

7. Strömungsenergieanlage nach einem der Ansprüche 2 bis 6, **dadurch gekennzeichnet, dass** der Einlassabschnitt (62) eine stromaufwärts liegende Eintrittsöffnung (70) definiert sowie derart veränderbar ausgebildet ist, dass die Eintrittsöffnung (70) vergrösserbar und verkleinerbar ist, und dass ein Einlassverstellantrieb (86) zum Ändern des Einlassabschnitts (62) vorhanden ist.

8. Strömungsenergieanlage nach Anspruch 7, **dadurch gekennzeichnet, dass** der Einlassabschnitt (62) im Umfangsrichtung schuppenartig überlappende Einlasssegmente (84) aufweist.

9. Strömungsenergieanlage nach einem der Ansprüche 2 bis 8, **dadurch gekennzeichnet, dass** der Strömungskanal (30) im Auslassabschnitt (66) weiter durch eine in Strömungsrichtung (30) sich erweiternde, bezüglich der Kanalwand (32) innenliegende Innenwand (38) begrenzt ist.

10. Strömungsenergieanlage nach Anspruch 8, **dadurch gekennzeichnet, dass** die Innenwand (38) verformbar ausgebildet und ein Innenwandantrieb (96) zum Verändern der Form der Innenwand (38) vorhanden ist.

11. Strömungsenergieanlage nach einem der Ansprüche 2 bis 10, **dadurch gekennzeichnet, dass** der mit dem Propeller (34) wirkverbundene Generator (48) im Gehäuse (10) stromabwärts der Innenwand (38) angeordnet.

12. Strömungsenergieanlage nach Anspruch 11, **dadurch gekennzeichnet, dass** der Generator (48) und der Propeller (34) in einem festen Abstand zueinander angeordnet sowie zusammen bezüglich des Gehäuses (10) in Richtung der Längsachse (12) verstellbar gelagert sind und ein Lageverstellantrieb (76')zum Ändern der axialen Position des Generators (48) und des Propellers (34) vorhanden ist.

13. Strömungsenergieanlage nach Anspruch 11, **dadurch gekennzeichnet, dass** der Generator (48) bezüglich des Gehäuses (10) ortsfest angeordnet sowie der axial gemessene Abstand zwischen dem Propeller (34) und dem Generator (48) veränderbar ausgebildet und ein Abstandverstellantrieb (76) zum Ändern des Abstands zwischen dem Generator (48) und dem Propeller (34) vorhanden ist.

14. Strömungsenergieanlage nach einem der Ansprüche 1 bis 13, **gekennzeichnet durch** eine einzige Einlassöffnung (28) und zwei einander gegenüberliegende, seitliche Auslassöffnungen (22).

15. Strömungsenergieanlage nach einem der Ansprüche 1 bis 14, **gekennzeichnet durch** einen Masten (58) an welchem das Gehäuse (10) um die Achse (52) schwenkbar gelagert ist.
